# FASCICULE DE BREVET EUROPEEN

(11) **EP 2 269 436 B1**
(45) Date de publication et mention de la délivrance du brevet: **06.02.2019**
(21) Numéro de dépôt: 10305715.4
(22) Date de dépôt: 01.07.2010
(51) Int. Cl.: A01C 17/00

(54) **Dispositif monodisque de distribution de produits en granules comme des engrais ou des molluscicides**
Einzelscheibenstreuer für granuliertes Gut wie Dünger oder Schneckenköder
Single disk spreading device for granular products such as fertilizers or molluscicides

(30) Priorité: 01.07.2009 FR 0954494
(43) Date de publication de la demande: 05.01.2011
(73) Titulaire: De Sangosse, 47480 Pont Du Casse (FR); CENTRE NATIONAL DU MACHINISME AGRICOLE DU GENIE RURAL DES EAUX ET DES FORETS (CEMAGREF), 92160 Antony (FR)
(72) Inventeur: Crebassa, Xavier, 47240 Bon-Encontre (FR); Piron, Emmanuel, 03300 Creuzier-le-Vieux (FR); Miclet, Denis, 03150 Varennes-sur-Allier (FR); Beurrier, Vivien, 03150 Montoldre (FR)
(74) Mandataire: Cabinet BARRE LAFORGUE & associés

(56) Documents cités:
- EP-A1- 1 504 645
- EP-A2- 0 303 325
- FR-A- 1 178 177

## Description

La présente invention concerne un dispositif de distribution monodisque de produits en granulés tels que des engrais ou des molluscicides.

Ces granulés sont généralement issus d'extrusion et prennent la forme de cylindres sensiblement de même diamètre que de longueur ou la forme de lentilles pour tenter d'améliorer les propriétés balistiques, la sphère restant la forme ayant les meilleures propriétés balistiques quand il est possible de les réaliser sous cette forme.

FR 1178 177 décrit un dispositif d'épandage de produits pulvérulents sur le sol comprenant un organe épandeur du type rotatif et un organe distributeur.

Les dispositifs existants comprennent généralement des ensembles de deux disques contrarotatifs portant des pales qui assurent la propulsion de ces granulés sous l'effet de la force centrifuge afin d'assurer la formation de deux nappes d'épandage, chacune issue d'un disque.

Ces deux nappes d'épandage se superposent afin d'assurer une répartition homogène et correspondant à la densité recherchée dans la partie médiane, centrée sur l'axe de déplacement du véhicule agricole qui assure le déplacement.

La zone latérale extérieure de chacune des deux nappes est progressivement dosée de façon dégressive.

De fait, il est prévu des passages avec une superposition adaptée des distributions de façon à recouvrir les zones latérales des nappes pour atteindre la densité recherchée de granulés sur toute la largeur de travail.

Sur ces distributeurs, la largeur de travail est variable mais si l'alimentation des disques avec leur pales est décalée angulairement, alors ils présentent des défauts de distribution : soit les nappes sont écartées avec un défaut de densité

selon l'axe de symétrie soit les nappes sont rapprochées avec un surplus donc un surdosage en produit distribué selon ce même axe de symétrie.

Pour une densité au sol recherchée, pour une répartition homogène de cette densité sur le sol et pour un type de produit, il faut néanmoins pouvoir assurer une variation de largeur de travail en conservant la densité prévue et nécessaire.

L'invention concerne un dispositif selon la revendication 1.

La présente invention propose un agencement comprenant un monodisque qui est d'une grande simplicité mais qui permet de faire varier la largeur de travail avec le même agencement, par un réglage aisé, en conservant la densité recherchée, ceci pour un ensemble donné de vitesse d'avance du véhicule et de vitesse de rotation du disque.

L'invention est maintenant décrite en détail en regard des dessins annexés sur lesquels les différentes figures représentent :
- figure 1 : une vue d'un matériel de l'art antérieur du type à deux disques contrarotatifs,
- figure 2 : un schéma d'un disque et des points d'alimentation,
- figure 3 : un schéma de la répartition des granulés au sol,
- figure 4 : une vue en perspective du boisseau indexable d'alimentation du dispositif monodisque de distribution selon la présente invention, et
- figure 5 : une vue de dessus du boisseau de la figure 4.

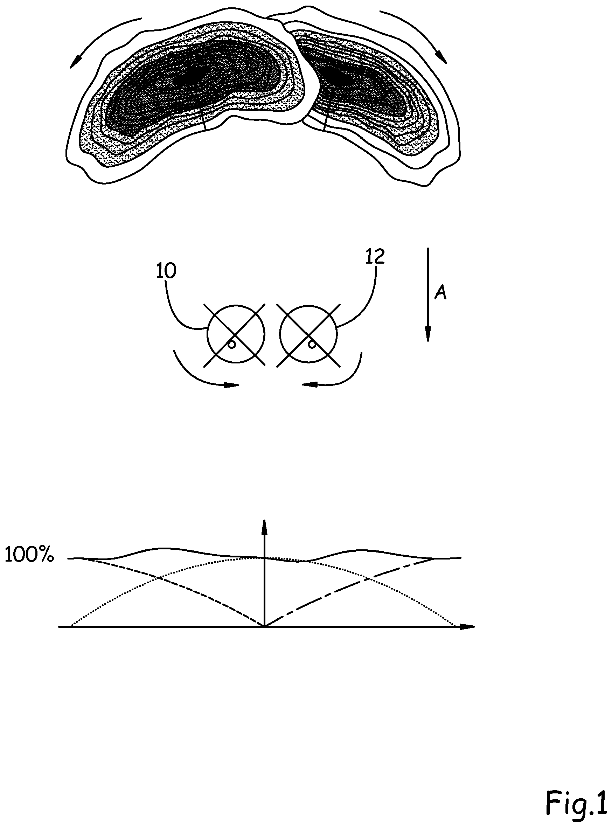

Sur la figure 1, on a représenté un ensemble à deux disques 10 et 12 contrarotatifs, le sens d'avancement du véhicule, non représenté, est indiqué par la flèche A.

Chacun des disques est équipé de pales qui assurent l'éjection des granulés.

Les pales peuvent présenter différentes formes mais là n'est pas l'objet de la présente invention que de comparer les pales de l'art antérieur.

Dans le mode de réalisation particulier représenté, les deux disques sont disposés de façon symétrique et tournent à la même vitesse, ils ont le même diamètre, le même nombre de pales.

Chacun de ces disques permet de réaliser au sol, la constitution d'une nappe de granulés avec une densité variable de l'extérieur de la nappe vers le centre, comme montré sur la figure 1.

La mise en oeuvre de ces dispositifs, quels qu'ils soient, se déroule de façon analogue.

Cette mise en oeuvre consiste à effectuer des passages successifs, parallèles, avec une superposition, lors du passage n, d'une demi nappe avec la nappe distribuée lors du passage n-1.

Sur cette figure 1, on a représenté en trait discontinu court, la quantité de produits en granulés distribuée lors du passage n-1, en pointillé la quantité de produits en granulés distribuée lors du passage n en cours, en trait mixte la quantité de produits en granulés lors du passage n+1 à venir et en trait continu la courbe cumulée résultant des différents passages.

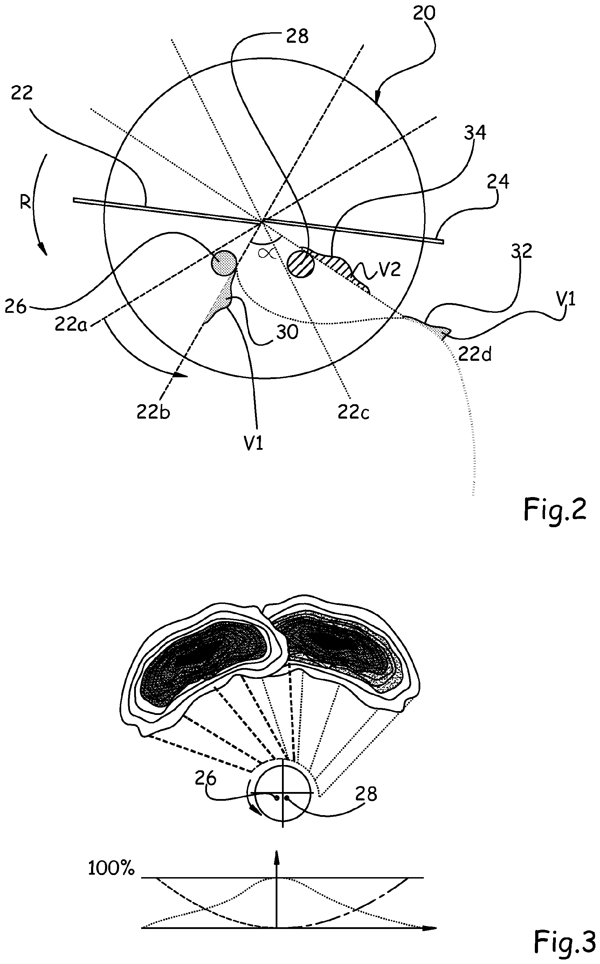

Sur la figure 2, on a représenté un schéma du dispositif de distribution monodisque selon la présente invention.

Ce dispositif comprend un disque unique 20, comprenant une paire de pales 22, 24, diamétralement opposées pour choisir un exemple simple.

Ces pales sont représentées en trait continu et on a représenté en trait discontinu les différentes positions a, b, c et d pertinentes de ces pales.

Le sens de rotation est indiqué par la flèche R.

Il est prévu plusieurs alimentations, en l'occurrence deux alimentations 26, 28, distinctes. Ces alimentations sont situées en des positions angulaires distinctes et successives. Dans ce mode de réalisation, les alimentations sont disposées sur un même cercle sans que cela soit une obligation pour un bon fonctionnement.

L'angle de séparation est noté α, pour le mode de réalisation représenté.

On a représenté respectivement en 30 la prise en charge du volume V1 de granulés, distribué par l'alimentation 26 sur la pale 22 dans la position 22b, prise en charge suivie de la phase d'accélération et de l'éjection en 32 de ce même volume V1 hors du disque par la même pale 22 dans la position 22d.

On a représenté en 34 la prise en charge du volume V2 de granulés, distribué par l'alimentation 28 sur la même pale 22 mais lorsque la pale 22 est en position 22d, quasiment simultanément à l'éjection de V1, prise en charge du volume V2 qui sera suivie à son tour de la phase d'accélération et de l'éjection du volume V2. Ce synoptique est bien entendu dépendant de différents paramètres notamment des angles séparant les alimentations ; des débits des alimentations ; des vitesses de rotation des pales ; des dimensions et géométrie des granulés ; du diamètre du disque.

On obtient alors pour un choix donné de paramètres, une distribution homogène, comme montré sur la figure 3.

La superposition partielle des nappes lors des passages successifs permet d'obtenir la répartition adaptée.

On note que dans le cas de ce monodisque, la répartition est homogène et régulière.

Selon un mode particulier de la présente invention, il est prévu un boisseau 40 d'alimentation, disposé en amont du disque de façon à permettre une répartition du flux de granulés par au moins deux alimentations 26 et 28, comme décrit ci-avant.

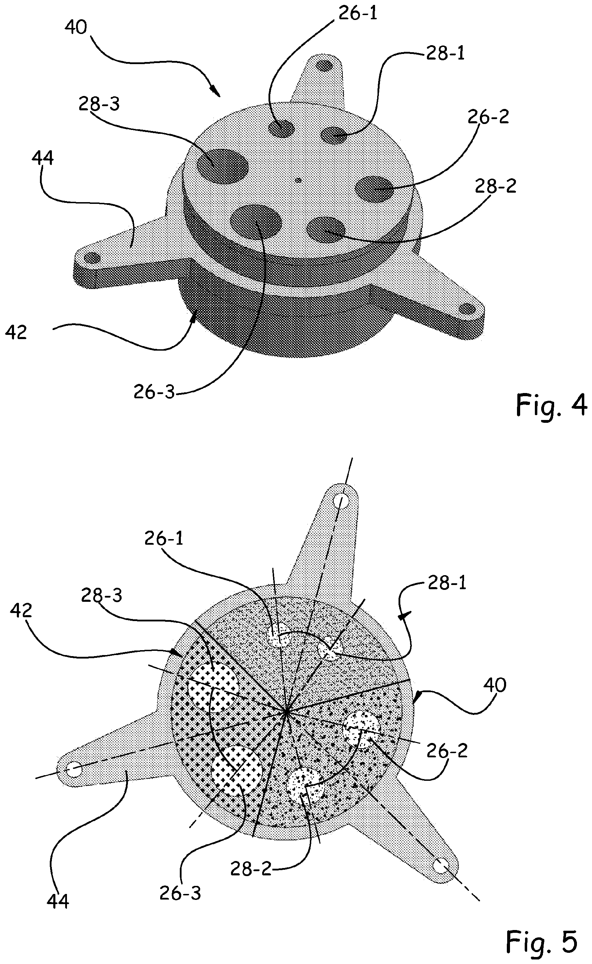

Ce boisseau 40 d'alimentation est représenté en détail sur les figures 4 et 5.

Ce boisseau 40 comprend un corps 42 avec des bras 44, le corps étant indexable angulairement par rapport au disque unique. Le corps est avantageusement cylindrique.

Le boisseau comprend dans le mode de réalisation représenté trois jeux d'alimentations 26-1, 28-1 ; 26-2, 28-2 ; 26-3, 28-3, positionnées chacune dans un secteur angulaire de 120°.

Les alimentations sont symbolisées par des orifices et ces orifices sont disposés avec leurs centres respectifs sur un même cercle centré par rapport au corps 42.

On note que d'un jeu d'alimentations 26-1, 28-1 à l'autre 26-2, 28-2, par exemple, la distance angulaire entre les alimentations d'un même jeu augmente et le diamètre des orifices d'un jeu d'alimentations par rapport à l'autre augmentent également. L'angle a initial augmente, figure 2.

Ainsi, en augmentant la distance angulaire, la largeur de travail augmente avec pour conséquence une zone d'épandage plus importante.

Le diamètre des orifices augmente simultanément si bien que le débit augmente, pour être adapté à cette nouvelle largeur de travail, tout en gardant la même densité de granulés au sol, c'est-à-dire la dose après recouvrement suite aux différents passages, ceci pour une vitesse d'avance constante. On peut donc passer, pour un même produit en granulés d'une largeur de travail à une autre largeur de travail de façon extrêmement simple sans avoir ni à recalculer quoi que ce soit, ni à modifier le dispositif.

Pour rendre effective cette modification, il suffit de réaliser une seule et unique opération, celle d'indexation du corps 42 tout entier, en manoeuvrant les bras 44 pour que, en plus d'augmenter la largeur de travail et de façon corrélée le débit, l'orientation de l'éjection soit toujours symétrique et centrée par rapport à la direction de déplacement A.

Il est entendu que lorsqu'un jeu d'alimentations est en service, les autres jeux d'alimentations sont hors service. Un jeu de masques, avec un obturateur par exemple, assure cette obturation sélective.

Tous ces réglages peuvent être automatisés sans aucune difficulté, afin de disposer d'une commande au volant du véhicule agricole pour le confort de l'opérateur et la manoeuvrabilité du dispositif.

Les modes de réalisation représentés notamment du boisseau sont schématiques afin de bien faire ressortir les caractéristiques de l'invention et restent purement illustratifs sans pouvoir constituer la réalisation industrielle qui reste à la portée de l'homme de l'art.

Le boisseau est disposé sous une trémie de façon connue et non représentée.

Le mode de réalisation principal tel qu'il vient d'être décrit peut être avantageusement conçu de façon différente sans pour autant sortir du cadre de l'invention.

C'est ainsi qu'il est possible pour la même invention de prévoir un monodisque qui comporte un seul jeu d'alimentations, à condition que l'écart angulaire des alimentations puisse varier et que le diamètre des orifices des alimentations puisse varier.

Ainsi, on peut donc modifier la largeur de travail en faisant varier l'écart angulaire entre les alimentations mais en même temps on peut faire varier le débit en modifiant la section des orifices des alimentations pour assurer une même densité de distribution.

Les alimentations à orifices de diamètre variable sont aisées à réaliser par superposition de masques munis de fenêtres par exemple, ces fenêtres venant plus ou moins en coïncidence de sorte à modifier la section des orifices des alimentations. Il est à ce propos rappelé que les orifices des alimentations n'ont aucune nécessité d'être circulaires. Seule la section de passage est importante. Selon une autre variante, il est possible de prévoir un jeu d'alimentations, toujours à écart variable, mais avec des sections différentes des orifices dudit jeu pour affiner la symétrie et la répartition lorsque ce jeu est en service.

## Revendications

1. Dispositif de distribution de produits en granulés sur une surface à partir d'une trémie d'alimentation, le dispositif comprenant :
- un disque (20) unique avec des pales (22,24) ;
- au moins un jeu d'au moins deux alimentations (26,28) disposé en amont du disque (20) unique, chaque alimentation (26,28) comprenant un orifice alimentant le disque (20) unique en produits en granulés ;
- des moyens pour faire varier un écart angulaire α séparant les orifices des alimentations d'au moins un jeu d'alimentations et de façon à faire varier la largeur de la surface, et ;
- des moyens pour faire varier la section des orifices des alimentations d'un même jeu d'alimentations (26,28) ;
**caractérisé en ce que** la section des orifices des alimentations d'un même jeu d'alimentations (26,28) varie simultanément avec la variation de l'écart angulaire.

2. Dispositif de distribution de produits en granulés selon la revendication 1, **caractérisé en ce qu'**il comprend un boisseau (40) comprenant un corps (42) indexable comprenant au moins un jeu (26,28) d'alimentations du disque (20) unique en produits en granulés.

3. Dispositif de distribution de produits en granulés selon la revendication 2, **caractérisé en ce que** le boisseau (40) comprend trois jeux (26-1,28-1;26-2,28-2;26-3,28-3) d'alimentations.

4. Dispositif de distribution de produits en granulés selon la revendication 3, **caractérisé en ce que** les orifices de chaque jeu (26-1,28-1 ;26-2,28-2;26-3,28-3) d'alimentations sont de section variable d'un jeu à un autre.

5. Dispositif selon l'une des revendications 2 à 4, **caractérisé en ce que** le boisseau (40) comprend des bras (44) pour permettre l'indexation.

## Patentansprüche

1. Vorrichtung zum Verteilen von granulierten Produkten auf einer Fläche aus einem Zuführtrichter heraus, wobei die Vorrichtung umfasst:
- eine einzelne Scheibe (20) mit Schaufeln (22, 24);
- mindestens einen Satz aus mindestens zwei Zuführungen (26, 28), die stromaufwärts der einzelnen Scheibe (20) angeordnet sind, wobei jede Zuführung (26, 28) eine Öffnung umfasst, die der einzelnen Scheibe (20) granulierte Produkte zuführt;
- Mittel, um einen Winkelabstand a, der die Öffnungen der Zuführungen mindestens eines Satzes an Zuführungen trennt, zu variieren, und um die Breite der Fläche zu variieren; und
- Mittel, um den Querschnitt der Öffnungen der Zuführungen ein und desselben Satzes an Zuführungen (26, 28) zu variieren;
**dadurch gekennzeichnet, dass** der Querschnitt der Öffnungen der Zuführungen ein und desselben Satzes an Zuführungen (26, 28) gleichzeitig mit dem Variieren des Winkelabstands variiert.

2. Vorrichtung zum Verteilen von granulierten Produkten nach Anspruch 1, **dadurch gekennzeichnet, dass** sie einen Ventilkegel (40) umfasst, der einen indexierbaren Körper (42) umfasst, welcher mindestens einen Satz (26, 28) an Zuführungen von granulierten Produkten der einzelnen Scheibe (20) umfasst.

3. Vorrichtung zum Verteilen von granulierten Produkten nach Anspruch 2, **dadurch gekennzeichnet, dass** der Ventilkegel (40) drei Sätze (26-1, 28-1; 26-2, 28-2; 26-3, 28-3) an Zuführungen umfasst.

4. Vorrichtung zum Verteilen von granulierten Produkten nach Anspruch 3, **dadurch gekennzeichnet, dass** die Öffnungen jedes Satzes (26-1, 28-1; 26-2, 28-2; 26-3, 28-3) an Zuführungen von einem Querschnitt sind, der von einem Satz zu einem anderen variabel ist.

5. Vorrichtung nach einem der Ansprüche 2 bis 4, **dadurch gekennzeichnet, dass** der Ventilkegel (40) Arme (44) umfasst, um das Indexieren zu ermöglichen.

## Claims

1. Device for spreading granular products on a surface from a supply hopper, the device comprising:
- a single disc (20) with blades (22, 24);
- at least one set of at least two supplies (26, 28) arranged upstream of the single disc (20), each supply (26, 28) comprising an orifice supplying the single disc (20) with granular products;
- means for making an angular clearance α vary, separating the orifices of supplies of at least one set of supplies and so as to make the width of the surface vary, and;
- means for making the section of the orifices of the supplies vary from one set of supplies (26, 28);
**characterised in that** the section of the orifices of the supplies of one same set of supplies (26, 28) simultaneously varies with the variation of the angular clearance.

2. Device for spreading granular products according to claim 1, **characterised in that** it comprises a bushel (40) comprising an indexable body (42) comprising at least one set (26, 28) of supplies of the single disc (20) with granular products.

3. Device for spreading granular products according to claim 2, **characterised in that** the bushel (40) comprises three sets (26-1, 28-1; 26-2, 28-2; 26-3, 28-3) of supplies.

4. Device for spreading granular products according to claim 3, **characterised in that** the orifices of each set (26-1, 28-1; 26-2, 28-2; 26-3, 28-3) of supplies are of variable section from one set to another.

5. Device according to one of claims 2 to 4, **characterised in that** the bushel (40) comprises arms (44) to make the indexing possible.
